# EUROPÄISCHE PATENTSCHRIFT

(11) **EP 2 726 318 B1**
(45) Veröffentlichungstag und Bekanntmachung des Hinweises auf die Patenterteilung: **26.06.2019**
(21) Anmeldenummer: 12718945.4
(22) Anmeldetag: 25.04.2012
(51) Int. Cl.: B60L 53/14, B60L 53/30, B60L 53/64, B60L 55/00, B60L 53/63, B60L 53/65, B60L 53/66

(54) **LADEVORRICHTUNG FÜR ELEKTROFAHRZEUGE UND VERFAHREN ZUM LADEN VON ELEKTROFAHRZEUGEN**
CHARGING DEVICE FOR ELECTRIC VEHICLES AND METHOD FOR CHARGING ELECTRIC VEHICLES
DISPOSITIF DE CHARGE POUR VÉHICULES ÉLECTRIQUES ET PROCÉDÉ DE CHARGE DE VÉHICULES ÉLECTRIQUES

(30) Priorität: 30.06.2011 DE 102011107628
(43) Veröffentlichungstag der Anmeldung: 07.05.2014
(60) Teilanmeldung: 19163611.7
(73) Patentinhaber: innogy SE, 45128 Essen (DE)
(72) Erfinder: BECKER, Gernot, 44269 Dortmund (DE)
(74) Vertreter: Cohausz & Florack
(86) Internationale Anmeldenummer: PCT/EP2012/057505
(87) Internationale Veröffentlichungsnummer: WO 2013/000599

(56) Entgegenhaltungen:
- WO-A1-2010/144595
- WO-A1-2011/019855
- US-A1- 2010 181 957

## Beschreibung

Der Gegenstand betrifft eine Ladevorrichtung für Elektrofahrzeuge und ein Verfahren zum Laden von Elektrofahrzeugen.

Die Verwendung von Elektrofahrzeugen verspricht eine Lösung vieler aktueller Probleme des Individualverkehrs: der für ihren Antrieb benötigte Strom kann auf umweltfreundliche Weise hergestellt werden, es entstehen keine Abgase am Fahrzeug selbst, die Lärmbelastung wird reduziert und der Elektroantrieb selbst ermöglicht prinzipbedingt einen höheren Wirkungsgrad als ein Motor, welcher auf der Verbrennung fossiler Brennstoffe beruht.

Die WO 2011/019855 A1 beschreibt ein Ladesystem, welches zwischen einer herkömmlichen Steckdose und einem Elektrofahrzeug angeordnet werden kann.

Die WO 2010/144595 A1 beschreibt ein Ladesystem, bei dem elektrische Energie von Energiespeichern zum Laden für Elektrofahrzeuge zur Verfügung gestellt wird.

Die US 2010/0181957 A1 zeigt ein System zum Laden einer Vielzahl von Elektrofahrzeugen unabhängig von dem Energieversorgungsnetz. Zum breiten Masseneinsatz von Elektrofahrzeugen muss aber auch eine einfache und flächendeckende Möglichkeit der Energieaufladung geschaffen werden, analog zum bekannten Tankstellennetz für flüssigen Kraftstoff. Augenblicklich ist zwar zumindest flächendeckend die Infrastruktur für eine Stromversorgung vorhanden, diese ist jedoch weitestgehend auf Wechselspannung basierend. Beim Laden mittels Wechselspannung dauert der Ladevorgang jedoch lange, da die in den Fahrzeugen in der Ladesteuerung verbauten AC/DC Wandler (Gleichrichter) nur für Leistungen von 3 bis 10 kW ausgelegt sind. Für größere Leistungen müssten die AC/DC Wandler erheblich größer sein. Auch die verbauten Halbleiter wären erheblich teurer.

Allein auch wegen ihres Gewichts ist derer Einsatz in einem Fahrzeug von den Herstellern teilweise nicht gewünscht.

Aus diesem Grunde werden von den Herstellern von Kraftfahrzeugen Gleichspannungs-Ladestationen bevorzugt. Die Gleichrichtung (AC/DC Wandlung) findet bei diesen Ladestationen in der Ladestation statt, was dazu führt, dass in den Kraftfahrzeugen keine Gleichrichter mehr notwendig sind, was die Produktionskosten für ein Fahrzeug verringert, den benötigten Bauraum reduziert und das Gewicht des Fahrzeugs minimiert.

Auf der anderen Seite wird von den Energieversorgern derzeit ein breit gefächertes Netz von AC Ladestationen aufgebaut. Diese Ladestationen kommunizieren mit den Elektrofahrzeugen durch Austausch von Ladeparametern, wie Signalisierung einer Ladebereitschaft durch die Ladestation, Signalisierung einer Ladebereitschaft durch das Elektrofahrzeug und Signalisierung eines Bemessungswertes der Stromversorgung durch die Ladestation an das Elektrofahrzeug. So existiert ein Vorentwurf zur DIN IEC 61851-1, welcher allgemeine Anforderungen an konduktive Ladesysteme für Elektrofahrzeuge beschreibt.

Elektrofahrzeuge gemäß dieser Norm können lediglich Informationen über einen höchsten kontinuierlichen Bemessungsstrom der Ladestation empfangen, wobei diese Information mittels einer Pulsweitenmodulation (PWM) des Tastverhältnisses des Signals übertragen wird. In Reaktion auf ein solches Signal kann das Elektrofahrzeug der Ladestation mitteilen, dass es für den Empfang des Ladestroms bereit ist, woraufhin der Ladestrom durch die Ladestation freigeschaltet wird. Diese Kommunikation zwischen Ladestation und Elektrofahrzeug erfolgt über einen Pilotleiter, welcher bevorzugt leistungslos ist und lediglich Informationen übertragen kann. Ein Pilotleiter kann als gegenständlicher Kommunikationsleiter angesehen werden.

Für Energieversorgungsunternehmen als auch für Nutzer von Elektrofahrzeugen ist jedoch nicht nur das einfache Empfangen und Einschalten des Ladestroms von Bedeutung, sondern es müssen weitere Informationen zwischen Fahrzeug und Ladestation ausgetauscht werden, welche eine benutzerbezogene Abrechnung ermöglichen. Darüber hinaus muss es möglich sein, unterschiedliche Ladeparameter, wie beispielsweise unterschiedliche Stromstärken und unterschiedliche Bezugstarife zwischen Elektrofahrzeug und Ladestation auszuhandeln. Darüber hinaus sollten Informationen über die Identität des Elektrofahrzeugs bzw. des Nutzers des Elektrofahrzeugs als auch Informationen über die Identität der Ladestation zwischen Ladestation und Elektrofahrzeug austauschbar sein. Der Austausch dieser Daten ist gemäß des Vorentwurfs der Norm nicht vorgesehen. Schließlich soll die Möglichkeit geschaffen werden, dass Elektrofahrzeuge, welche für das Laden mit Gleichspannung ausgelegt sind, also keinen eigenen Gleichrichter aufweisen, ihre Batterien auch an AC Ladestation aufladen können.

Aus den zuvor hergeleiteten Nachteilen ergibt sich für den Gegenstand die Aufgabe, eine Kommunikation und einen Energieaustausch zwischen einem Elektrofahrzeug mit Gleichstromladevorrichtung und einer Wechselstrom Ladestationen sicherzustellen.

Diese Aufgabe wird gegenständlich durch eine Vorrichtung nach Anspruch 1 gelöst. Es wird bevorzugt, dass die Ladevorrichtung eine erste Kabelgarnitur aufweist. Diese erste Kabelgarnitur ist zum Anschluss an eine Ladestation eingerichtet. Vorzugsweise hat diese Kabelgarnitur auf der einen Seite einen Stecker, der in eine Buchse einer Ladestation eingesteckt werden kann. Auf der anderen Seite kann die Kabelgarnitur in das Innere der Ladevorrichtung führen und dort verschaltet sein, wie nachfolgend noch gezeigt werden wird.

Darüber hinaus hat die Ladevorrichtung eine zweite Kabelgarnitur. Die zweite Kabelgarnitur ist vorzugsweise mit einem Stecker bestückt, der zum Anschluss an ein Elektrofahrzeug geeignet ist. Auf der anderen Seite kann die Kabelgarnitur in die Ladevorrichtung hinein geführt sein und die darin enthaltenen Leiter können mit der Ladevorrichtung verschaltet sein, wie nachfolgend gezeigt werden wird.

Sowohl die erste Kabelgarnitur als auch die zweite Kabelgarnitur ist mit Energieleitern ausgestattet. Dies sind vorzugsweise Litzen und Adern der Kabelgarnitur mit einem entsprechend großen Leitungsquerschnitt, vorzugsweise größer als 2,5mm². Ferner ist in der ersten Kabelgarnitur ein erster Kommunikationsleiter, beispielsweise ein Pilotleiter vorgesehen. In der zweiten Kabelgarnitur ist ein zweiter Kommunikationsleiter, ebenfalls beispielsweise ein Pilotleiter vorgesehen. Über den ersten Kommunikationsleiter, der aus einer oder mehreren Adern gebildet sein kann, kann eine Kommunikation zwischen der Ladevorrichtung und einer Ladestation stattfinden. Über den zweiten Kommunikationsleiter, der ebenfalls aus einer oder mehreren Adern gebildet sein kann, kann eine Kommunikation zwischen der Ladevorrichtung und dem Elektrofahrzeug stattfinden.

Um es zu ermöglichen, dass ein Elektrofahrzeug, welches lediglich Gleichstromladung erlaubt, insbesondere welches keinen eigenen Gleichrichter aufweist, mit einer Ladestation zu verbinden, die lediglich Wechselstrom zur Verfügung stellt, wird gegenständlich vorgeschlagen, dass in der Ladevorrichtung elektrisch zwischen den ersten und zweiten Energieleitern ein Gleichrichter angeordnet ist. Dieser Gleichrichter richtet eine Wechselspannung, die auf dem ersten Energieleiter von der Ladestation zur Verfügung gestellt wird, in eine Gleichspannung für das Elektrofahrzeug um. Dies erlaubt es, ein Fahrzeug, welches für eine DC Ladung eingerichtet ist, an den Gleichrichter der Ladevorrichtung anzuschließen und zu laden.

Um sicherzustellen, dass der Ladevorgang zwischen dem für eine DC Ladung ausgestatteten Fahrzeug mit der Ladestation, welche eine AC Ladung ermöglicht, funktioniert, wird vorgeschlagen, dass eine Kommunikationsvorrichtung in der Ladevorrichtung vorgesehen ist. Mit Hilfe der Kommunikationsvorrichtung können sowohl von der Ladestation als auch von dem Elektrofahrzeug Ladeparameter empfangen und an diese übermittelt werden. Abhängig von den empfangenen und übermittelten Ladeparametern, die zwischen Fahrzeug und Ladestation ausgetauscht werden, wird die Kommunikationseinrichtung eine ebenfalls in der Ladevorrichtung verbaute Steuereinrichtung ansteuern, die im Gegenzug den Gleichrichter entsprechend reguliert, derart, dass der Gleichrichter die DC Ladespannung und den DC Ladestrom entsprechend den Ladeparametern an das Elektrofahrzeug liefert und auf der anderen Seite von der Ladestation einen entsprechenden Wechselstrom empfängt. Insbesondere die zur Verfügung gestellte Leistung von der Ladestation ist relevant für die an das Elektrofahrzeug abgegebene Spannung und Stromstärke. Der Gleichrichter muss einerseits wissen, welche Spannung das Fahrzeug erwartet und welche maximale Stromstärke die Laderegelung des Fahrzeugs verarbeiten kann. Auf der anderen Seite muss der Gleichrichter wissen, welche Spannung und welcher Strom von der Ladestation zur Verfügung gestellt wird. Darüber hinaus muss auch die Ladestation wissen, welche Ladeparameter das Fahrzeug erwartet und die Spannung und Stromstärke auf dem ersten Energieleiter entsprechend einstellen.

Mit Hilfe der gegenständlichen Ladevorrichtung ist es möglich, ein Aushandeln von Ladeparametern zwischen Elektrofahrzeug und Ladestation auch dann zu gewährleisten, wenn die Ladestation eine Wechselspannung zur Verfügung stellt, das Elektrofahrzeug jedoch eine Gleichspannung erwartet.

Aus diesem Grunde wird gemäß einer weiteren Ausführung der Erfindung vorgeschlagen, dass der Gleichrichter eine auf dem ersten Energieleiter anliegende Wechselspannung in eine in den zweiten Energieleiter gespeiste Gleichspannung wandelt. Die Wechselspannung entspricht der von der Ladestation zur Verfügung gestellten Wechselspannung, die eine von der Ladestation begrenzte Stromstärke aufweist. Die Höhe sowohl der Wechselspannung als auch der Stromstärke ist abhängig von zwischen der Ladevorrichtung, dem Elektrofahrzeug und der Ladestation ausgetauschten Ladeparametern. An seinem Ausgang stellt der Gleichrichter eine Gleichspannung zur Verfügung. Auch diese muss den zwischen der Ladevorrichtung und dem Elektrofahrzeug ausgehandelten Ladeparametern entsprechen. Insbesondere darf die Gleichspannung ein bestimmtes Niveau nicht überschreiten. Auch ist die Ladestromstärke durch den Gleichrichter vorzugsweise zu begrenzen, um die Laderegelung des Fahrzeugs nicht zu überlasten.

Gemäß einer weiteren Ausführung der Erfindung wird vorgeschlagen, dass die Kommunikationseinrichtung zur Protokollumsetzung zwischen einem Kommunikationsprotokoll für den ersten Kommunikationsleiter und einem Kommunikationsprotokoll für den zweiten Kommunikationsleiter eingerichtet ist. Die Kommunikation über den ersten Kommunikationsleiter, also die zwischen der Ladestation und der Ladevorrichtung, erfolgt vorzugsweise gemäß einem Protokoll, welches für die Wechselstromladung definiert ist. Auf der anderen Seite erfolgt die Kommunikation über den zweiten Kommunikationsleiter, also die zwischen der Ladevorrichtung und dem Elektrofahrzeug gemäß einem Protokoll, welches für die Gleichstromladung vorgesehen ist. Insbesondere das Elektrofahrzeug, welches für die Gleichstromladung vorgesehen ist, unterstützt nur ein solches Protokoll. Um die von dem Elektrofahrzeug empfangenen Informationen zu den Ladeparametern der Ladestation mitzuteilen, ist somit eine Protokollumsetzung notwendig. Außerdem müssen weitere Ladeparameter, wie beispielsweise Vertragsparameter als auch zusätzliche Ladeparameter ausgetauscht werden.

Vertragsparameter können beispielsweise vertraglich vereinbarte Stromtarife, vertraglich vereinbarte Ladungsrestriktionen, z.B. maximal beziehbare Stromstärken, Benutzeridentifikationen und dergleichen sein. Insbesondere die Benutzeridentifikation kann durch die zwischengeschaltete Ladevorrichtung erfolgen. Insbesondere kann diese Ladevorrichtung die Benutzeridentifikation gespeichert haben oder diese von einem Benutzer abfragen. Dies kann beispielsweise berührungslos über einen von dem Benutzer mitgeführten Transponder erfolgen. Darüber hinaus können Netzparameter, wie beispielsweise momentan maximal verfügbare Stromstärke mit der Ladestation ausgehandelt werden. Auch können während des gesamten Ladevorgangs die Ladeparameter angepasst werden, wobei hierbei über den Energieleiter oder den ersten Kommunikationsleiter die Ladeparameter auch während des Ladevorgangs zwischen Ladestation und Ladevorrichtung kommuniziert werden können.

Auch kann die Ladevorrichtung vor oder während eines Ladevorgangs mit dem Elektrofahrzeug entweder über die Energieleiter der zweiten Kabelgarnitur oder die zweiten Kommunikationsleiter Ladeparameter austauschen. Entsprechend empfangener Ladeparameter kann die Ladevorrichtung zum Einen eine Mitteilung an die Ladestation über die zweiten Kommunikationsleiter oder die zweiten Energieleiter senden als auch den Gleichrichter ansteuern derart, dass dessen Ausgangsleistung des Gleichrichters an die empfangenen Ladeparameter angepasst wird.

Darüber hinaus kann die Ladevorrichtung Informationen über bezogene Energiemengen, welche von der Ladestation erhalten wurden, mit der Benutzeridentifikation versehen und zurück an die Ladestation übermitteln. Hierdurch wird eine sichere Abrechnung der bezogenen Energie gewährleistet, wobei das Elektrofahrzeug selber nicht über diese Fähigkeiten verfügen muss.

Bei dem Elektrofahrzeug kann es sich sowohl um ein Fahrzeug, welches ausschließlich einen Elektromotor aufweist, als auch um ein Fahrzeug handeln, welches sowohl einen Elektromotor als auch einen Verbrennungsmotor, wie etwa einen Ottomotor oder Dieselmotor oder eine andere Art von Motor aufweist. Die Ladestation kann sowohl eine öffentliche stationäre Ladestation sein als auch eine Ladestation, welche nur einem bestimmten Personenkreis zugänglich ist. Bei der Ladestation kann es sich auch um eine mobile Ladestation handeln. Die Ladestation kann Strom aus einem Stromnetz beziehen, elektrische Energie in Akkumulatoren vorhalten oder einen Generator aufweisen, mit dem elektrische Energie erzeugt werden kann. Die Verbindung zwischen Ladestation und Elektrofahrzeug kann elektromechanisch mittels den Kabelgarnituren hergestellt werden.

Die Kommunikationsleiter und die Energieleiter der ersten und/oder zweiten Kabelgarnitur können gemeinsam in jeweils einer Kabelgarnitur geführt werden. Zumindest eine Kabelgarnitur kann fest mit der Ladestation oder fest mit dem Elektrofahrzeug verbunden sein. Die Kabelgarnitur kann eine Vielzahl von einzelnen Leitern umfassen. Insbesondere kann die Kabelgarnitur einen Energieleiter zum Übertragen des Ladestroms und einen Pilotleiter (Kommunikationsleiter) umfassen. Bei dem von der Ladestation empfangenen Ladestrom kann es sich um Wechselstrom oder um Drehstrom handeln.

Die Ladestation, die vorzugsweise normgerecht Ladeparameter austauschen möchte, kann beispielsweise eine Information über einen kontinuierlichen Bemessungsstrom, insbesondere mittels der zuvor beschriebenen Pulsweitenmodulation aussenden. Insbesondere kann die Ladestation eine serielle Kommunikation mit der gegenständlichen Ladevorrichtung aufbauen. Die Ladevorrichtung kann dann die Bereitschaft für den Empfang des Ladestroms, wenn diese von dem Fahrzeug empfangen wurde, gegenüber der Ladestation signalisieren.

Gemäß einer weiteren Ausführung der Erfindung wird vorgeschlagen, dass auf dem ersten Kommunikationsleiter eine Aufforderung zur seriellen Kommunikation von Ladeparametern empfangen wird. Diese Aufforderung zur seriellen Kommunikation von Ladeparametern kann beispielsweise normgerecht erfolgen. Hierbei kann beispielsweise ein auf eine bestimmte Weise moduliertes Signal auf dem Pilotleiter angelegt werden.

Gemäß einem vorteilhaften Ausführungsbeispiel wird vorgeschlagen, dass das Kommunikationssignal ein pulsweitenmoduliertes Signal ist. Dies kann den technischen Effekt haben, dass die Erzeugung der Signale, die Überlagerung der Signale auf einen Gleichspannungspegel und die Erfassung der Signale mit einfachen Mitteln zu implementieren ist. Es kann sein, dass der obere Scheitelwert des pulsweitenmodulierten Signals dem Gleichspannungspegel auf dem Pilotleiter entspricht. Es kann sein, dass der untere Scheitelwert des pulsweitenmodulierten Signals einer negativen Spannung entspricht. Insbesondere kann der untere Scheitelwert des pulsweitenmodulierten Signals einer negativen Spannung mit dem Betrag des Gleichspannungspegels auf dem Pilotleiter entsprechen.

Gemäß einem vorteilhaften Ausführungsbeispiel wird vorgeschlagen, dass in dem Tastverhältnis des Kommunikationssignals die Aufforderung zur Kommunikation codiert ist. Dies kann eine Aufforderung zur seriellen Kommunikation sein. Insbesondere kann das Kommunikationssignal ein Tastverhältnis von 90 Prozent aufweisen. Beim Empfang eines entsprechenden PWM Signals kann in der zwischen Elektrofahrzeug und Fahrzeug angeordneten Einrichtung eine Kommunikation von Ladeparametern über den Energieleiter ausgelöst werden. Dieses normgerechte Signal kann beispielsweise das Generieren eines ersten vorbestimmten Gleichspannungspegels auf dem Kommunikationsleiter sein. Das Generieren eines ersten vorbestimmten Gleichspannungspegels auf einem Kommunikationsleiter kann durch Anlegen eines vorbestimmten Gleichspannungspegels auf der Seite der Ladestation an den Kommunikationsleiter erfolgen. Hierbei ist der Gleichspannungspegel diejenige Gleichspannung, welche sich nach Abzug etwaig auf dem Kommunikationsleiter überlagerter und zeitlich variabler Signalspannungen ergibt.

Gemäß einer weiteren Ausführung der Erfindung wird auch vorgeschlagen, dass das Kommunikationssignal einen ersten Gleichspannungspegel aufweist und dass in Reaktion auf das von der Ladestation empfangene Kommunikationssignal ein zweiter Gleichspannungspegel auf dem Kommunikationsleiter von der Ladevorrichtung bewirkt wird. Beispielsweise ist es möglich, dass in der zwischen Ladestation und Elektrofahrzeug angeordneten Ladevorrichtung in Reaktion auf den Empfang des Kommunikationssignals dieses normkonform verändert wird, derart, dass der Ladestation gegenüber der Anschluss eines normkonformen Fahrzeugs simuliert wird.

Gegenüber dem Elektrofahrzeug hat die gegenständliche Ladevorrichtung die Funktionalität einer DC Ladestation unter Verwendung des entsprechenden Protokolls. Das bedeutet, dass ausgangsseitig in Richtung des Elektrofahrzeugs in der Kommunikationseinrichtung die der Kommunikationseinrichtung einer DC Ladestation nachgebildete Kommunikationsmittel angeordnet sind, welche normgerecht die Kommunikation von der Ladestation zur Kommunikationseinrichtung über den ersten Pilotleiter in eine Kommunikation von der Kommunikationseinrichtung zu den Elektrofahrzeug über den zweiten Pilotleiter umwandelt.

Gegenüber dem Elektrofahrzeug erscheint die Kommunikationseinrichtung somit als ob sie eine DC Ladestation wäre. Das Elektrofahrzeug muss sich lediglich normgerecht gegenüber der Kommunikationseinrichtung verhalten und ein DC Ladeprotokoll verwenden. Das Aushandeln von Ladeparametern erfolgt dann mittels der Kommunikationseinrichtung mit dem Fahrzeug.

Gemäß einer weiteren Ausführung der Erfindung wird vorgeschlagen, dass eine Ladestromerkennungseinrichtung vorgesehen ist. Diese Ladestromerkennungseinrichtung ist vorzugsweise mit den ersten Energieleitern verbunden. Mit Hilfe der Ladestromerkennungseinrichtung ist es möglich, festzustellen, ob die Ladestation einen Einphasen- oder einen Mehrphasenwechselstrom in den ersten Energieleiter einspeist. Abhängig davon kann mit Hilfe der Ladestromerkennungseinrichtung der Gleichrichter über die Steuereinrichtung angesteuert werden, um eine entsprechende Gleichrichtung vorzunehmen.

Gemäß einer weiteren Ausführung der Erfindung wird vorgeschlagen, wie zuvor erläutert, dass die Kommunikationseinrichtung zum Empfangen und/oder Senden von Ladeparametern eingerichtet ist. Außerdem kann die Kommunikationseinrichtung die Ladeparameter auswerten. Auf der einen Seite kann die Kommunikationseinrichtung über die ersten Kommunikationsleiter mit der Ladestation kommunizieren. Auf der anderen Seite kann die Kommunikationseinrichtung über die zweiten Kommunikationsleiter mit dem Elektrofahrzeug kommunizieren.

Gemäß einer weiteren Ausführung der Erfindung ist eine Kommunikation auch über die Energieleiter möglich, insbesondere im Rahmen einer Power-Line-Communication Kommunikation. Der Austausch von Ladeparametern zwischen Ladestation und Ladevorrichtung einerseits und zwischen Ladevorrichtung und Elektrofahrzeug andererseits hängt von dem jeweils unterstützen Protokoll ab. Hierbei können Ladeparameter umfassend Anforderungsinformationen, Ladestrominformationen, Ladespannungsinformationen, Tarifinformationen, Zählerstandsinformationen, Ladezustandsinformationen, Batteriezustandsinformationen, Identifizierungsinformationen, Autorisierungsinformationen und/oder Rückspeiseinformationen ausgetauscht werden. Anforderungsinformationen können beispielsweise eine Anforderung zur seriellen Kommunikation von der Ladestation sein. Auf diesen Anforderungen hin kann die Ladevorrichtung der Ladestation die generelle Bereitschaft zum Laden mitteilen, als auch vorzugsweise den Bemessungsstrom für den Ladestrom mitteilen. Dies geschieht, wie zuvor erläutert, insbesondere mittels Pulsweitenmodulation, insbesondere bei der Verwendung eines Protokolls nach DIN IEC 61851-1.

Die Anforderungsinformationen werden dann auch von der Ladevorrichtung an das Elektrofahrzeug gemäß einem weiteren Protokoll, welches für das Gleichstromladen definiert ist, übertragen werden. Die Kommunikationseinrichtung kann somit die Anforderungssignale, die von der Ladestation empfangen werden, in Anforderungssignale für das Elektrofahrzeug umwandeln und Antworten des Elektrofahrzeugs auswerten und in Antworten an die Ladestation umwandeln.

In Reaktion auf Anforderungsinformationen werden Ladestrominformationen und Ladespannungsinformationen ausgetauscht. Hierbei wird die Ladevorrichtung von dem Elektrofahrzeug abfragen, wie hoch ein Ladestrom und/oder wie hoch eine Ladespannung sein soll/darf und diese Information normgerecht oder darüber hinaus gemäß einem umfangreicheren Protokoll der Ladestation mitteilen.

Auch ist es möglich, Tarifinformationen von der Ladestation abzufragen und diese dem Fahrzeug zur Verfügung zu stellen oder anzuzeigen, um dem Benutzer die Möglichkeit zu geben, ein Laden freizugeben oder eben nicht, abhängig von den Tarifinformationen.

Auch ist es möglich, dass die Ladestation der Ladevorrichtung Zählerstandsinformationen mitteilt. Diese Zählerstandsinformationen können entweder über den ersten Kommunikationsleiter oder den ersten Energieleiter übertragen werden. Die Zählerstandsinformationen können gemäß einem weiteren Protokoll an das Elektrofahrzeug übertragen werden und dort oder in der Ladevorrichtung vorzugsweise mit Benutzerinformationen signiert werden, um sicherzustellen, dass die Zählerstandsinformationen bei der Übermittlung an eine Abrechnungszentrale nicht verändert werden.

Auch ist es möglich, dass das Elektrofahrzeug an die Ladevorrichtung Ladezustandsinformationen über den Ladezustand der Fahrzeugbatterie mitteilt. Insbesondere Ladezustandsinformationen können gemäß einem CHAdeMO-Protokoll oder dem TCP/IP-Protokoll, vorzugsweise über den CAN-Bus mit dem Fahrzeug ausgetauscht werden. Abhängig von den Ladezustandsinformationen können Ladespannung und Ladestrom eingestellt werden, wobei hierzu die Steuereinrichtung auf den Gleichrichter einwirken kann.

Auch ist es möglich, Batteriezustandsinformationen abzufragen, insbesondere die Informationen zur Batterietemperatur. Abhängig von diesen Informationen kann der Ladestrom und/oder die Ladespannung ebenfalls durch die Steuereinrichtung am Gleichrichter eingestellt werden.

Authentifizierungs- als auch Autorisierungsinformationen können zum Einen von dem Fahrzeug abgefragt werden und zum Anderen an die Ladestation übermittelt werden, um abhängig von diesen Informationen ein Freigeben des Ladestroms in der Ladestation steuern zu können.

Auch ist es möglich, dass das Elektrofahrzeug elektrische Energie in das Netz rückspeist. Um eine Rückspeisung zu initiieren, können Rückspeiseinformationen von der Ladestation in der Ladevorrichtung empfangen werden und in der entsprechende Anweisungen an das Elektrofahrzeug umgewandelt und an das Elektrofahrzeug übermittelt werden.

Somit ist es möglich, mittels der Kommunikationseinrichtung diverse Kommunikationen zwischen Ladevorrichtung und Ladestation als auch zwischen Ladevorrichtung und Elektrofahrzeug zu initiieren und umzuwandeln.

Gemäß einem vorteilhaften Ausführungsbeispiel wird auch vorgeschlagen, dass das Ladeparametersignal mittels eines Power-Line-Communication (PLC) Moduls auf dem Energieleiter moduliert wird. Die Kommunikationseinrichtung kann beispielsweise ein PLC Modem derart ansteuern, dass dieses auf den Energieleiter das Ladeparametersignal, umfassend zumindest die Ladeparameter, moduliert. Mittels der Kommunikationseinrichtung ist es möglich, über den Energieleiter und das PLC Modem mit der Ladestation und/oder dem Elektrofahrzeug zu kommunizieren. Hiermit ist der Austausch von Ladeparametern über den Energieleiter möglich. Die Vorrichtung kann eine sogenannte "ID-Box" sein, welche als Kommunikationseinheit zwischen die Ladestation und das Elektrofahrzeug geschaltet ist. Die Vorrichtung kann auch in ein bestehendes Fahrzeug nachgerüstet werden. Hierbei kann die Vorrichtung in einem Bauraum im Fahrzeug angeordnet werden. Auch kann die Vorrichtung als Zwischenstecker auf die Ladebuchse im Fahrzeug aufgesteckt werden und gegenüber dem Ladekabel als Buchse des Fahrzeugs agieren. Auf der Ladestationsseite kann ein erstes Kabel in die Vorrichtung eingesteckt sein, welches den Energieleiter und den Pilotleiter umfasst. Auf der Elektrofahrzeugseite kann ein zweites Kabel eingesteckt sein, welches ebenfalls einen Energieleiter und einen zweiten Pilotleiter umfasst. Der Energieleiter kann in der Vorrichtung von dem ladestationsseitigen Eingang zu dem fahrzeugseitigen Eingang kurzgeschlossen werden. Über Abgriffe können Ladeparametersignale über Ladeparameter auf den Energieleiter oder den Kommunikationsleiter aufmoduliert werden und von dem Energieleiter und/oder dem Kommunikationsleiter abgegriffen werden. Hierüber ist eine Kommunikation der Ladeparametersignale mit der Ladestation und/oder dem Elektrofahrzeug möglich.

Beispielsweise kann ein genormter, mehrpoliger, beispielsweise siebenpoliger oder sechspoliger, Stecker eine Kabelgarnitur aufnehmen und in die Vorrichtung eingesteckt werden. Dieser Stecker kann beispielsweise drei Phasen eines Drehstromnetzes (L1, L2, L3), einen Nullleiter (N) und einen Erdleiter (PE) enthalten. Darüber hinaus kann ein Pilotleiter und ein weiterer Erdleiter vorgesehen sein.

Auch kann die Ladevorrichtung mit dem Fahrzeug über eine zweite Kabelgarnitur verbunden werden. In der zweiten Kabelgarnitur können ebenfalls mehrere, zum Beispiel sechs oder sieben, Adern vorgesehen sein. Dabei können Energieleiter (L1, L2, L3, N, PE), wie zuvor erläutert, neben einem zweiten Pilotleiter und einer zweiten Erdleitung vorgesehen sein.

Die Kommunikationseinrichtung in der Vorrichtung kann fahrzeugseitig den in einer DC Ladestation vorgesehenen Kommunikationsmitteln nachgebildet sein. Das bedeutet, dass sich die Kommunikationseinrichtung in der Vorrichtung entsprechend einer DC Ladesäule verhalten kann. Das heißt, dass die Vorrichtung in Richtung des Elektrofahrzeugs normgerechte Kommunikationssignale für eine DC Ladung aussenden und empfangen kann. Die ausgesendeten Signale können beispielsweise gegenüber dem Fahrzeug indizieren, dass eine Infrastruktur zur DC Energielieferung bereit ist. In Reaktion auf ein solches Signal kann fahrzeugseitig ein Schalter umgelegt werden, welcher anzeigt, dass das Fahrzeug zur DC Energieaufnahme bereit ist. Nach Empfang dieses Signals, dass das Fahrzeug zur DC Energieaufnahme bereit ist, kann mittels der Vorrichtung entweder über den ersten Pilotleiter oder über den ersten Energieleiter der Ladestation die Freigabe des Ladestroms übermittelt werden, woraufhin die Ladestation den Ladestrom über den DC Energieleiter freigibt.

Gemäß einer weiteren Ausführung der Erfindung wird vorgeschlagen, dass der Gleichrichter ausgangsseitig eine Leistung zwischen 3kW und 20kW, abhängig von über den zweiten Kommunikationsleiter entsprechend einem zweiten Kommunikationsprotokoll empfangenen Ladeparametern verfügbar macht. Das Elektrofahrzeug kann gegenüber der Ladevorrichtung indizieren, welche Ladeleistung möglich ist. Abhängig davon kann der Gleichrichter über die Steuereinrichtung angesteuert werden und die entsprechende Leistung zur Verfügung stellen. Die Kommunikation der Ladeleistung kann mittels des CHAdeMO- oder TCP/IP-Protokolls erfolgen. Dies kann entweder über den Kommunikationsleiter erfolgen oder auch mittels Power-Line-Communication über den Energieleiter. Das Kommunikationsprotokoll, welches hierzu verwendet wird, entspricht einem Protokoll für das DC Laden, Z.B. nach DIN IEC 15118 oder DIN IEC 61851-24.

Um ein Rückspeisen der in einer Fahrzeugbatterie gespeicherten Energie in das Versorgungsnetz zu ermöglichen, wird vorgeschlagen, dass ein Wechselrichter zwischen den ersten und zweiten Energieleitern in der Ladevorrichtung angeordnet ist. Mit Hilfe dieses Wechselrichters ist es möglich, von dem Energiespeicher des Elektrofahrzeugs empfangene Gleichspannung in eine Wechselspannung umzurichten, die dann an eine Ladestation abgegeben und sukzessive in das Versorgungsnetz eingeleitet wird.

Gemäß einer weiteren Ausführung der Erfindung wird vorgeschlagen, dass der Gleichrichter, die Kommunikationseinrichtung und die Steuereinrichtung und/oder der Wechselrichter in einem gemeinsamen, von der Ladestation und dem Elektrofahrzeug getrennten Gehäuse angeordnet sind. Vorzugsweise sind die erste und/oder die zweite Garnitur in das gemeinsame Gehäuse eingeführt. Es ist jedoch auch möglich, dass die Kabelgarnituren mittels Steckkontakten an das Gehäuse angeschlossen werden.

Die Merkmale der Verfahren und Vorrichtungen sind im Rahmen der abhängigen Ansprüche frei miteinander kombinierbar.

Nachfolgend wird der Gegenstand anhand einer Ausführungsbeispiele zeigenden Zeichnung näher erläutert. In der Zeichnung zeigen:
- Fig. 1: schematisch einen Anschluss eines Elektrofahrzeugs an eine Ladestation gemäß des Standes der Technik;
- Fig. 2: schematisch einen Anschluss eines Elektrofahrzeugs an eine Ladestation mit einer zwischengeschalteten gegenständlichen Ladevorrichtung;
- Fig. 3: eine schematische Ansicht einer gegenständlichen Ladevorrichtung mit Kommunikationseinrichtung und Steuereinrichtung sowie einen Gleichrichter.

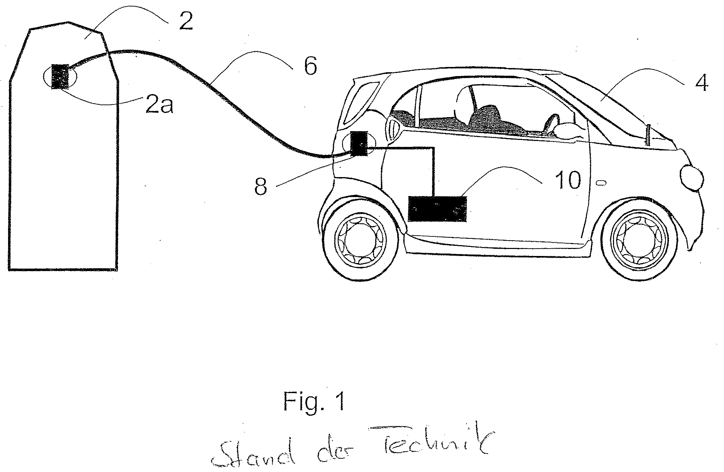

Fig. 1 zeigt eine Ladestation 2 mit einem elektrischen Anschluss 2a. An den elektrischen Anschluss 2a der Ladestation 2 kann ein Kabel 6 mit einem Stecker angeschlossen werden. Das Kabel 6 ist auf der anderen Seite an einen elektrischen Anschluss (Ladebuchse) 8 eines Elektrofahrzeugs 4 anschließbar. Über das Kabel 6 kann von der Ladestation 2 elektrische Energie an das Elektrofahrzeug 4 übertragen werden, wodurch ein Energiespeicher 10 im Elektrofahrzeug 4 aufgeladen werden kann.

Die in Fig. 1 gezeigte Anordnung verlangt, dass sowohl Ladestation 2 als auch Elektrofahrzeug 4 dem gleichen Ladeschema folgen, nämlich entweder AC Laden oder DC Laden. Wenn die Ladestation 2 als AC Ladestation gebildet ist, kann sie über das Kabel 6 eine Wechselspannung zur Verfügung stellen. In diesem Fall benötigt das Fahrzeug 4 an dem Energiespeicher 10, insbesondere einer Ladesteuerschaltung einen Gleichrichter, um den Energiespeicher 10 aufladen zu können.

Auf der anderen Seite kann die Ladestationen 2 eine DC Ladestationen sein, die eine Gleichspannung zur Verfügung stellt. Dann benötigt das Fahrzeug 4 keinen Gleichrichter und der Energiespeicher 10 kann unmittelbar über eine Ladesteuerschaltung ohne ein vorgeschaltetes Gleichrichten geladen werden.

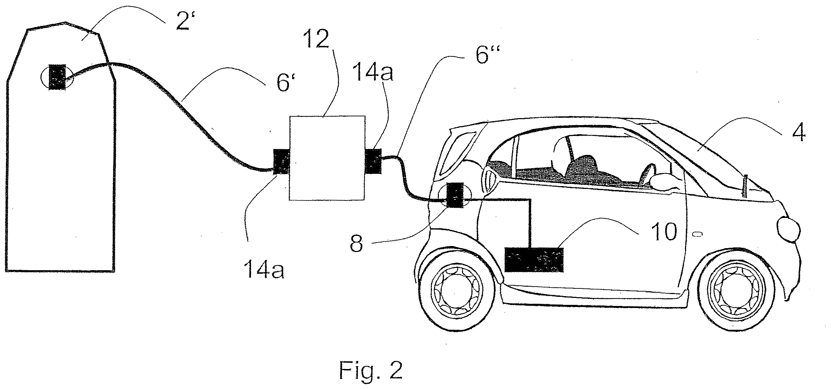

Problematisch ist jedoch, dass die Ladestationen 2, die derzeit von Energieversorgern aufgestellt werden, vornehmlich AC Ladestationen sind und somit eine Wechselspannung zur Verfügung stellen. Wenn die Fahrzeuge 4 keinen eigenen Gleichrichter aufweisen, können diese an den AC Ladestationen 2 nicht geladen werden. Um nun ein Laden eines Fahrzeugs 4, welches nur mit Gleichspannung geladen werden kann, an einer Wechselspannungsladestation 2 zu ermöglichen, wird die Ladevorrichtung 12 vorgeschlagen, wie sie in Fig. 2 dargestellt ist.

Fig. 2 zeigt die Ladestationen 2', welche eine AC Ladestation 2' ist. Diese ist über eine erste Kabelgarnitur 6' mit der Ladevorrichtung 12 verbunden. Hierbei kann ein Steckkontakt 14a an der Kabelgarnitur 6' angeordnet sein, der in eine Buchse der Ladevorrichtung 12 eingesteckt wird. Ausgangsseitig kann die Ladevorrichtung 12 mit einer zweiten Kabelgarnitur 6" über einen Steckkontakt 14 verbunden sein. Eine zweite Kabelgarnitur 6" verbindet die Ladevorrichtung 12 mit der Ladebuchse 8 des Fahrzeugs 4. Über die zweite Kabelgarnitur 6" kann die Ladevorrichtung 12 eine Gleichspannung an den Energiespeicher 10 des Fahrzeugs 4 anlegen und somit ein Gleichspannungsladen ermöglichen.

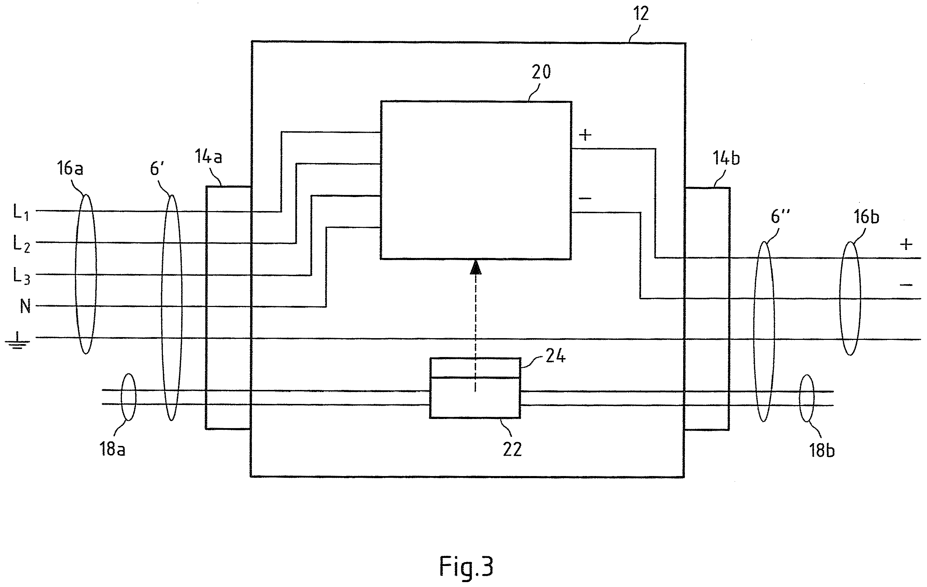

In der Fig. 3 ist eine erfindungsgemäße Ladevorrichtung 12 schematisch dargestellt.

Zu erkennen ist die erste Kabelgarnitur 6', die aus den Energieleitern 16a und den Kommunikationsleitern 18a gebildet ist. Die Energieleiter 16a umfassen drei Phasen L1, L2, L3 sowie einen Nullleiter N und einen Erdleiter. Die Kommunikationsleiter 18a umfassen einen zweiadrigen Kommunikationsleiter über den eine serielle als auch eine parallele Kommunikation möglich ist.

Die erste Kabelgarnitur 6' ist über den Steckkontakt 14a mit der Ladevorrichtung 12 verbunden. Die in der ersten Kabelgarnitur 6' vorhandenen Energieleiter 16a, insbesondere die Phasen als auch der Nullleiter sind mit einem in der Ladevorrichtung angeordneten Gleichrichter 20 verbunden. Ausgangsseitig der Ladevorrichtung 12 befindet sich ein zweiter Steckkontakt 14b, der mit der zweiten Kabelgarnitur 6'' verbunden ist. Die zweite Kabelgarnitur 6" umfasst die Energieleiter 16b sowie die Kommunikationsleiter 18b. Die Energieleiter 16b umfassen einen Plusleiter und einen Minusleiter sowie den vorzugsweise durch die Ladevorrichtung 12 durchgeschleiften Erdleiter.

Die Kommunikationsleiter 18b umfassen ebenfalls ein zweiadriges Kabel, insbesondere ein zweiadriges verdrilltes Kabel, über das eine serielle und parallele Kommunikation möglich ist. Die Energieleiter 16b, insbesondere die Plus- und Minusleiter sind mit dem jeweiligen Plus- und Minusausgang des Gleichrichters 20 verbunden.

Die Kommunikationsleiter 18a, 18b sind mit der Kommunikationseinrichtung 22 verbunden, welche einen Protokollumsetzer aufweist, sowie Sendemittel und Empfangsmittel. Die Kommunikationseinrichtung 22 ist mit der Steuereinrichtung 24 verbunden und instruiert diese, den Gleichrichter 20 entsprechend der kommunizierten Ladeparameter zu steuern.

Im Betrieb, d.h. wenn die erste Kabelgarnitur 6' in die Ladestation 2 und die Vorrichtung 12 eingesteckt ist und die zweite Kabelgarnitur 6" in das Fahrzeug 4 und die Vorrichtung 12, kann ein Ladebetrieb aufgenommen werden.

Zunächst übermittelt die Ladestation 2 über die Kommunikationsleiter 18a seine generelle Ladebereitschaft zum Laden eines Elektrofahrzeugs 4 mittels Wechselspannung.

Die Kommunikationseinrichtung 22 empfängt von der Ladestation 2 somit die generelle Bereitschaft zum Laden. Andererseits empfängt die Kommunikationseinrichtung 22 von dem Fahrzeug 4 über die Kommunikationsleiter 18b ebenfalls ein Signal, welches die generelle Bereitschaft des Fahrzeugs indiziert, geladen zu werden. Dieses Signal kann nach dem CHAdeMO-Protokoll oder über ein CAN-Bus, jedoch auch über ein beliebiges anderes Protokoll, welches für die Gleichspannungsladung verwendet wird, kodiert sein.

Die Kommunikationseinrichtung 22 übermittelt der Steuereinrichtung 24 die in den von dem Fahrzeug empfangenen Ladesignalen enthaltenen Informationen zum Ladestatus sowie zur Ladespannung und zum Ladestrom, woraufhin die Steuereinrichtung ein entsprechendes Ansteuersignal für den Gleichrichter 20 generiert, so dass der Gleichrichter 20 an den Plus- und Minuspolen seines Ausgangs eine korrekte Spannung ausgibt. Gleichzeitig übermittelt die Kommunikationseinrichtung 22 über die Kommunikationsleiter 18a an die Ladestation 2 Informationen zur Bereitschaft des Ladens und insbesondere Informationen zum Bemessungswert des Ladestroms, insbesondere zum maximalen Ladestrom. Im Anschluss daran gibt die Ladestation 2 den Ladevorgang frei und stellt die Ladeenergie über die Energieleiter 16a zur Verfügung.

Der Gleichrichter 20 richtet die Wechselspannung auf den Energieleitern 16a in eine Gleichspannung um und speist diese über die Energieleiter 16b in das Fahrzeug ein.

Vor dem Laden, insbesondere vor der Freigabe des Ladestroms als auch während des Ladens können zwischen dem Fahrzeug 4 und der Ladestation 2 über die Kommunikationsleiter 18a, 18b und die Kommunikationseinrichtung 22 Ladeparameter ausgetauscht werden. Insbesondere können Fahrzeugidentifikationsdaten, Zählerstände und dergleichen ausgetauscht werden. Die hierfür notwendige Protokollumsetzung kann in der Kommunikationseinrichtung 22 erfolgen. Die Kommunikationseinrichtung 22 kann auch mit den Energieleitern 16a, 16b verbunden sein, um beispielsweise eine Power-Line-Communication mit der Ladestation 2 bzw. dem Fahrzeug 4 herzustellen.

Durch die Protokollumsetzung ist es möglich, die entsprechend einem ersten Protokoll kodierte Signale von der Ladestation 2 an das Elektrofahrzeug 4 gemäß einem zweiten Protokoll zu übermitteln und umgekehrt. Auch ist es möglich, dass die Kommunikationseinrichtung 22 die Signale auswertet und entsprechende Steuersignale an den Gleichrichter 20 übermittelt.

Auch kann im Gleichrichter 20 eine Kombination aus einem Gleichrichter und einem Wechselrichter vorhanden sein, so dass von dem Fahrzeug 4 über die Energieleiter 16b empfangene Energie in eine Wechselspannung umgewandelt werden kann und in das Versorgungsnetz über die Energieleiter 16a zurückgespeist werden kann.

## Patentansprüche

1. Ladevorrichtung (12) für Elektrofahrzeuge umfassend:
- eine erste zum Anschluss an eine Ladestation (2') eingerichtete Kabelgarnitur (6') mit ersten Energieleitern (16a), die drei Phasen (L1, L2, L3), einen Nullleiter (N) und einen Erdleiter umfassen, und ersten Kommunikationsleitern (18a) als Pilotleiter, über die eine serielle als auch eine parallele Kommunikation möglich ist,
- wobei die erste Kabelgarnitur (6') gemeinsam die ersten Energieleiter (16a) und ersten Kommunikationsleiter (18a) führt und auf der einen Seite einen Stecker hat, der in eine Buchse der Ladestation (2') eingesteckt werden kann und auf der anderen Seite in das Innere der Ladevorrichtung (12) hineingeführt und dort verschaltet ist,
- eine zweite zum Anschluss an ein Elektrofahrzeug (4) eingerichtete Kabelgarnitur (6") mit zweiten Energieleitern (16b), die einen Plusleiter, einen Minuslieter sowie einen durch die Ladevorrichtung (12) durchgeschleiften Endleiter umfassen, und zweiten Kommunikationsleitern (18b) als Pilotleiter, über die eine serielle und parallele Kommunikation möglich ist,
- wobei die zweite Kabelgarnitur (6") gemeinsam die zweiten Energieleiter (16b) und zweiten Kommunikationsleiter (18b) führt und auf der einen Seite mit einem Stecker bestückt ist, der zum Anschluss an ein Elektrofahrzeug (4) geeignet ist und auf der anderen Seite in die Ladevorrichtung (12) hinein geführt ist und die darin enthaltenen Leiter mit der Ladevorrichtung (12) verschaltet sind,
- einen in der Ladevorrichtung (12) und zwischen den ersten und zweiten Energieleitern (16a, 16b) angeordneten und mit diesen verbundenen Gleichrichter (20),
**dadurch gekennzeichnet, dass** eine
- in der Ladevorrichtung (12) angeordnete Kommunikationseinrichtung (22) zum Empfangen und Senden von Ladeparametern über die ersten und zweiten Kommunikationsleiter (18a, 18b) eingerichtet ist und zur Protokollumsetzung eines ersten Kommunikationsprotokolls für den ersten Kommunikationsleiter inein zweites Kommunikationsprotokoll für den zweiten Kommunikationsleiter eingerichtet ist, wobei die Kommunikationseinrichtung (22) diverse Kommunikationen zwischen Ladevorrichtung (22) und Ladestation (2') als auch zwischen Ladevorrichtung (12) und Elektrofahrzeug (4) initiieren und umwandeln kann, und
- eine in der Ladevorrichtung (12) angeordnete, mit der Kommunikationseinrichtung (22) verbundene Steuereinrichtung (24) zum Steuern des Gleichrichters (20) in Abhängigkeit von den Ladeparametern eingerichtet ist.

2. Ladevorrichtung nach Anspruch 1, **dadurch gekennzeichnet, dass** der Gleichrichter (20) eine auf den ersten Energieleitern (16a) anliegende Wechselspannung in eine in die zweiten Energieleiter (16b) gespeiste Gleichspannung wandelt.

3. Ladevorrichtung nach Anspruch 1 oder 2, **dadurch gekennzeichnet, dass** die Kommunikationseinrichtung (22) zur Protokollumsetzung zwischen einem ersten seriellen Kommunikationsprotokoll für die ersten Kommunikationsleiter (18a) und einen zweiten Kommunikationsprotokoll, welches für das Gleichstromalden definiert ist, für die zweiten Kommunikationsleiter (18b) eingerichtet ist.

4. Ladevorrichtung nach einem der vorangehenden Ansprüche, **dadurch gekennzeichnet, dass** eine Ladestromerkennungseinrichtung vorgesehen und mit den ersten Energieleitern (16a) verbunden ist, wobei die Ladestromerkennungseinrichtung zum Erkennen einer Einphasen- oder Mehrphasen-Wechselspannung auf den ersten Energieleitern (16a) eingerichtet ist.

5. Ladevorrichtung nach einem der vorangehenden Ansprüche, **dadurch gekennzeichnet, dass** die Kommunikationseinrichtung (22) zum Empfangen und/oder Senden und/oder Auswerten von Ladeparametern umfassend:
Anforderungsinformationen,
Ladestrominformationen,
Ladespannungsinformationen,
Tarifinformationen,
Zählerstandsinformationen,
Ladezustandsinformationen,
Batteriezustandinformationen,
Authentifizierungsinformationen,
Autorisierungsinformationen, und/oder
Rückspeisungsinformationen,
über die zweiten Kommunikationsleiter (16b) entsprechend dem zweiten Kommunikationsprotokoll eingerichtet ist und/oder über die ersten Kommunikationsleiter (16a) entsprechend einem ersten Kommunikationsprotokoll eingerichtet ist.

6. Ladevorrichtung nach einem der vorangehenden Ansprüche, **dadurch gekennzeichnet, dass** der Gleichrichter (20) ausgangsseitig eine Leistung zwischen 3kW und 10kW abhängig von den über die zweiten Kommunikationsleiter (18b) entsprechend einem zweiten Kommunikationsprotokoll empfangenen Ladeparametern verfügbar macht.

7. Ladevorrichtung nach einem der vorangehenden Ansprüche, **dadurch gekennzeichnet, dass** ein Wechselrichter zwischen den ersten (16a) und zweiten (16b) Energieleitern angeordnet und mit diesen verbundenen ist, wobei der Wechselrichter eine auf den zweiten Energieleitern (16b) anliegende Gleichspannung in eine in die ersten Energieleiter (16a) gespeiste Wechselspannung wandelt.

8. Ladevorrichtung nach einem der vorangehenden Ansprüche, **dadurch gekennzeichnet, dass** der Gleichrichter (20), die Kommunikationseinrichtung (22) und die Steuereinrichtung (24) und/oder der Wechselrichter in einem gemeinsamen, von der Ladestation (2') und dem Elektrofahrzeug (4) getrennten Gehäuse angeordnet sind.

## Claims

1. Charging device (12) for electric vehicles comprising:
- a first cable set (6'), which is set up for connection to a charging station (2'), having first energy conductors (16a) which comprise three phases (L1, L2, L3), a neutral conductor (N) and an earth conductor, and first communication conductors (18a) as pilot conductors, via which serial as well as parallel communication is possible,
- the first cable set (6') jointly carrying the first energy conductors (16a) and first communication conductors (18a) and having, on one side, a plug which can be plugged into a socket of the charging station (2') and, on the other side, being led into the interior of the charging device (12) and connected there,
- a second cable set (6"), which is set up for connection to an electric vehicle (4), having second energy conductors (16b), which comprise a plus conductor, a minus conductor and an earth conductor looped through the charging device (12), and second communication conductors (18b) as pilot conductors, via which serial and parallel communication is possible,
- the second cable set (6") jointly carrying the second energy conductors (16b) and second communication conductors (18b) and being equipped on one side with a plug which is suitable for connection to an electric vehicle (4) and on the other side, led into the interior of the charging device (12) and the conductors contained therein, being connected to the charging device (12),
- a rectifier (20) arranged in and connected to the charging device (12) and between the first and second energy conductors (16a, 16b),
**characterized in that**
- a communication device (22), which is arranged in the charging device (12) is arranged for receiving and transmitting charging parameters via the first and second communication conductors (18a, 18b) and for protocol conversion a first communication protocol for the first communication conductors into a second communication protocol for the second communication conductors, the communication device (22) being able to initiate and convert various communications between charging device (22) and charging station (2') and between charging device (12) and electric vehicle (4), and
- a control device (24) arranged in the charging device (12) and connected to the communication device (22) is set up to control the rectifier (20) as a function of the charging parameters.

2. Charging device according to claim 1, **characterized in that** the rectifier (20) converts an AC voltage present on the first energy conductors (16a) into a DC voltage fed into the second energy conductors (16b).

3. Charging device according to claim 1 or 2, **characterized in that** the communication device (22) is set up for protocol conversion between a first serial communication protocol for the first communication conductors (18a) and a second communication protocol, which is defined for DC charging, for the second communication conductors (18b).

4. Charging device according to one of the preceding claims, **characterized in that** a charging current detecting device is provided and connected to the first energy conductors (16a), the charging current detecting device being arranged for detecting a single-phase or multi-phase alternating voltage on said first power conductors (16a).

5. Charging device according to one of the preceding claims, **characterized in that** the communication device (22) comprises for receiving and/or transmitting and/or evaluating charging parameters:
Request information,
Charging current information,
Charging voltage information,
Tariff information,
Meter reading information,
State of charge information,
Battery condition information,
Authentication information,
Authorization information, and/or
Feedback information,
via the second communication conductors (16b) in accordance with the second communication protocol and/or via the first communication conductors (16a) in accordance with a first communication protocol.

6. Charging device according to one of the preceding claims, **characterized in that** the rectifier (20) makes available on the output side a power between 3kW and 10kW depending on the charging parameters received via the second communication conductors (18b) in accordance with a second communication protocol.

7. Charging device according to one of the preceding claims, **characterized in that** an inverter is arranged between and connected to the first (16a) and second (16b) energy conductors, the inverter converting a DC voltage present on the second energy conductors (16b) into an AC voltage fed into the first energy conductors (16a).

8. Charging device according to one of the preceding claims, **characterized in that** the rectifier (20), the communication device (22) and the control device (24) and/or the inverter are arranged in a common housing separate from the charging station (2') and the electric vehicle (4).

## Revendications

1. Dispositif de charge (12) pour véhicules électriques, comprenant :
- un premier jeu de câbles (6'), qui sont conçus pour le raccordement à une station de charge (2'), avec des premiers conducteurs d'énergie (16a), qui comprennent trois phases (L1, L2, L3), un neutre (N) et un conducteur de mise à la terre, et avec des premiers conducteurs de communication (18a) en tant que conducteurs pilotes, par le biais desquels une communication peut être réalisée aussi bien en série qu'en parallèle,
- où le premier jeu de câbles (6') conduit les premiers conducteurs d'énergie (16a) et les premiers conducteurs de communication (18a) ensemble, et est doté, sur un côté, d'une fiche mâle, qui peut être enfichée dans une fiche femelle de la station de charge (2'), et est introduit, de l'autre côté, à l'intérieur du dispositif de charge (12) et y est connecté,
- un deuxième jeu de câbles (6") conçu pour le raccordement à un véhicule électrique (4), avec des deuxièmes conducteurs d'énergie (16b), qui comprennent un conducteur positif, un conducteur négatif, ainsi qu'un conducteur de mise à la terre bouclé à travers le dispositif de charge (12), et des deuxièmes conducteurs de communication (18b) en tant que conducteurs pilotes, par le biais desquels une communication peut être réalisée aussi bien en série qu'en parallèle,
- où le deuxième jeu de câbles (6") conduit les deuxièmes conducteurs d'énergie (16b) et les deuxièmes conducteurs de communication (18b) ensemble, et est sur un côté doté d'une fiche mâle apte à être raccordée à un véhicule électrique (4), et est passé de l'autre côté dans le dispositif de charge, et où les conducteurs qui y sont contenus sont connectés avec le dispositif de charge (12),
- un redresseur (20) disposé dans le dispositif de charge (12) et entre les premiers et les deuxièmes conducteurs d'énergie (16a, 16b) et reliés à ceux-ci,
**caractérisé**
- **en ce qu'**un système de communication (22) est arrangé dans le dispositif de charge (12), le système de communication étant conçu pour la réception et l'émission de paramètres de charge par le biais des premiers et des deuxièmes conducteurs de communication (18a, 18b), et pour la conversion de protocole d'un premier protocole de communication pour le premier conducteur de communication en un deuxième protocole de communication pour le deuxième conducteur de communication, où le système de communication (22) peut initier et convertir diverses communications entre le système de communication (22) et la station de charge (2'), de même qu'entre le dispositif de charge (12) et le véhicule électrique (4), et
- **en ce qu'**un système de commande (24) disposé dans le dispositif de charge (12) et connecté au système de communication (22), est conçu pour la commande du redresseur (20) en fonction des paramètres de charge.

2. Dispositif de charge selon la revendication 1, **caractérisé en ce que** le redresseur (20) transforme une tension alternative appliquée sur les premiers conducteurs d'énergie (16a) en une tension continue injectée aux deuxièmes conducteurs d'énergie (16b).

3. Dispositif de charge selon revendication 1 ou 2, **caractérisé en ce que** le système de communication (22) est conçu pour la conversion de protocole entre un premier protocole de communication sériel pour les premiers conducteurs de communication (18a) et un deuxième protocole de communication, qui est défini pour la charge de courant continu, pour les deuxièmes conducteurs de communication (18b).

4. Dispositif de charge selon l'une des revendications précédentes, **caractérisé en ce qu'**un système de reconnaissance de courant de charge est prévu et est relié aux premiers conducteurs d'énergie (16a), où le système de reconnaissance de courant de charge est conçu pour reconnaître une tension alternative monophasée ou polyphasée sur les premiers conducteurs d'énergie (16a).

5. Dispositif de charge selon l'une des revendications précédentes, **caractérisé en ce que** le système de communication (22) est conçu pour la réception et / ou pour l'émission et ou l'évaluation de paramètres de charge comprenant :
- des informations sur des exigences,
- des informations sur un courant de charge,
- des informations sur une tension de charge,
- des informations sur un tarif,
- des informations sur un état du compteur,
- des informations sur une situation de charge,
- des informations sur un état de la batterie,
- des informations sur une authentification,
- des informations sur une autorisation, et / ou
- des informations sur une récupération,
par le biais des deuxièmes conducteurs de communication (16b) selon un deuxième protocole de communication et / ou par le biais des premiers conducteurs de communication (16a), selon un premier protocole de communication.

6. Dispositif de charge selon l'une des revendications précédentes, **caractérisé en ce que** le redresseur (20) mette à disposition du côté sortie, en fonction des paramètres de charge reçus par le biais des deuxièmes conducteurs de communication (18b) selon un deuxième protocole de communication, une puissance entre 3 kW et 10 kW.

7. Dispositif de charge selon l'une des revendications précédentes, **caractérisé en ce qu'**un onduleur est disposé entre les premiers conducteurs d'énergie (16a) et les deuxièmes conducteurs d'énergie (16b) et est connecté avec ceux-ci, où l'onduleur transforme une tension continue appliquée sur les deuxièmes conducteurs d'énergie (16b) en un tension alternative injectée dans les premiers conducteurs d'énergie (16a).

8. Dispositif de charge selon l'une des revendications précédentes, **caractérisé en ce que** le redresseur (20), le système de communication (22) et le système de commande (24) et / ou l'onduleur sont disposés dans un boîtier commun, séparé de la station de charge (2') et du véhicule électrique (4).
